# EUROPÄISCHE PATENTSCHRIFT

(11) **EP 1 364 332 B1**
(45) Veröffentlichungstag und Bekanntmachung des Hinweises auf die Patenterteilung: **02.04.2008**
(21) Anmeldenummer: 02717945.6
(22) Anmeldetag: 08.02.2002
(51) Int. Cl.: H04L 12/14

(54) **VERFAHREN ZUR BELASTUNG EINES VON EINEM COMPUTER VERWALTETEN KONTOS FÜR DIENSTLEISTUNGEN, EIN TELEKOMMUNIKATIONSNETZ, EIN COMPUTER-SYSTEM, UND EIN COMPUTERPROGRAMMPRODUKT**
METHOD FOR CHARGING A COMPUTER-MANAGED SERVICE ACCOUNT, TELECOMMUNICATION NETWORK, COMPUTER SYSTEM AND COMPUTER PROGRAM PRODUCT
PROCEDE PERMETTANT DE DEBITER UN COMPTE DE PRESTATION DE SERVICES GERE PAR INFORMATIQUE, RESEAU DE TELECOMMUNICATIONS, SYSTEME INFORMATISE ET PROGICIEL Y RELATIFS

(30) Priorität: 13.02.2001 DE 10106904
(43) Veröffentlichungstag der Anmeldung: 26.11.2003
(73) Patentinhaber: Orga Systems GmbH, 33104 Paderborn (DE)
(72) Erfinder: GERDES, Peter, 33617 Bielefeld (DE); SCHUCHART, Goetz, 33098 Paderborn (DE); YAQUB, Adnan, 33689 Bielefeld (DE)
(74) Vertreter: Richardt, Markus Albert
(86) Internationale Anmeldenummer: PCT/DE2002/000464
(87) Internationale Veröffentlichungsnummer: WO 2002/065355

(56) Entgegenhaltungen:
- WO-A-99/30480
- US-A- 5 995 822

## Beschreibung

Die Erfindung betrifft ein Verfahren zur Belastung eines von einem Computer verwalteten Kontos für Dienstleistungen, ein Telekommunikationsnetz, wie insbesondere ein Mobilfunknetz, ein Computer-System, und ein Computerprogrammprodukt mit den Merkmalen des Oberbegriffs des jeweiligen unabhängigen Patentanspruchs.

Bei bekannten Verfahren bzw. Mobilfunknetzen verwendet der Benutzer ein Mobilfunkendgerät, das mit einer Prepaid-Karte versehen ist. Wünscht der Benutzer die Herstellung einer Telekommunikationsverbindung, so wählt er eine Telefonnummer oder dergleichen. Bei dem bekannten, sogenannten CDR-Verfahren (CDR = Call Data Record) werden am Ende des von dem Benutzer geführten Gesprächs die Gesprächskosten des soeben geführten Gesprächs von dem der betreffenden Prepaid-Karte zugeordneten Konto (Prepaid-Konto) abgezogen. Hierbei besteht die Gefahr, daß das Konto keine ausreichende Deckung aufweist.

Bei dem weiteren bekannten, sogenannten IN-Verfahren (IN = Intelligent Network) wird der Kontostand des der betreffenden Prepaid-Karte zugeordneten Kontos (Prepaid-Konto) während des Gesprächs in periodischen Intervallen um die angefallenen Gesprächsgebühren reduziert. Unterschreitet der Kontostand einen bestimmten, vorgegebenen Wert, so wird dem Benutzer ein Warnton übermittelt und die Verbindung wird nachfolgend bei nicht mehr ausreichendem Kontostand unterbrochen.

Für die periodische Belastung des Kontos während des Gesprächs ist ein entsprechend gestaltetes Mobilfunknetz, das einen hohen apparativen Aufwand erfordert, notwendig. Dies gilt insbesondere, weil ein typisches Mobilfunknetz mehrere Millionen Teilnehmer gleichzeitig mit Dienstleistungen versorgen muß. Eine periodische Kontostandsabfrage, ein Vergleich mit einem vorbestimmten Guthabenbetrag, und eine Reduzierung des Kontostands für jeden der Teilnehmer während des Gesprächs belasten das Mobilfunknetz und die in dem Mobilfunknetz vorgesehenen Computer bzw. dessen Computer-system erheblich.

Aus der US 5,995,822 ist ein Verfahren zur Vergebührung von parallelen Transaktionen auf einem Prepaid-Konto bekannt. Durch das Verfahren soll sichergestellt werden, dass bei parallelen Transaktionen, wie sie zum Beispiel bei einer Konferenzschaltung oder einer Rufweiterleitung vorkommen, die dabei anfallenden Gebühren nicht das Guthaben des Prepaid-Kontos überschreiten. Hierzu wird zu Beginn einer Transaktion ein vorgegebener Betrag von dem Prepaid-Konto abgezogen und dieser Transaktion zugeordnet. Für eine parallele weitere Transaktion wird entsprechend vorgegangen. Wenn durch eine der Transaktionen der dem Prepaid-Konto vorab belastete Guthabenbetrag verbraucht ist, wird ein weiter solcher Betrag vorab abgezogen. Ein eventuelles Restguthaben wird dem Prepaid-Konto wieder gutgeschrieben.

Dagegen liegt der Erfindung die Aufgabe zu Grunde, ein Verfahren zur Belastung eines Prepaid-Kontos zu schaffen, welches einerseits nicht den Nachteil des CDR-Verfahrens aufweist, nämlich einen eventuellen Gebührenausfall aufgrund Belastung des Prepaid-Kontos erst mit Beendigung der Kommunikationsverbindung, und andererseits auch nicht den Nachteil von Intelligent Network "IN"-Verfahren aufweist, das heißt, eine nur relativ geringe Belastung des Mobilfunknetzes mit Signalisierungsinformationen für die Vergebührung ermöglicht, wobei ein nur geringer apparativer Aufwand erforderlich sein soll.

Die Aufgabe der vorliegenden Erfindung wird durch die in den unabhängigen Patentansprüchen angegebenen Maßnahmen jeweils gelöst. Vorteilhafte Weiterbildungen der Erfindung sind in den zugehörigen abhängigen Ansprüchen angegeben.

Ein wesentlicher Aspekt der Erfindung besteht darin vor und/oder während der Inanspruchnahme bzw. Bereitstellung einer Dienstleistung, wie insbesondere die Herstellung einer Kommunikationsverbindung, zu überprüfen, ob das Prepaid-Konto bzw. Guthabenkonto, das für die Inanspruchnahme der Dienstleistung belastet werden soll, einen vorbestimmten Kontostand überschreitet oder unterschreitet.

Erfindungsgemäß ist bei der Unterschreitung des vorbestimmten Kontostands vor und/oder während der Bereitstellung einer Kommunikationsverbindung vorgesehen, daß eine periodische Belastung des Prepaid-Kontos bzw. Guthabenkontos während der Inanspruchnahme der Dienstleistung vorgenommen wird.

Ergibt die Überprüfung jedoch, daß der vorbestimmte Kontostand überschritten wird, so ist erfindungsgemäß bevorzugt vorgesehen, das Prepaid-Konto bzw. Guthabenkonto für die Inanspruchnahme der Dienstleistung erst nach der Beendigung der Inanspruchnahme der Dienstleistung, wie insbesondere dem Abbruch der Kommunikationsverbindung, zu belasten.

Durch eine geeignete Wahl des vorbestimmten Kontostands mit dem der betreffende Kontostand verglichen wird, kann erreicht werden, daß das Konto in der Regel eine für die Inanspruchnahme der Dienstleistung ausreichende Deckung aufweisen wird. Da die Abbuchung der Kosten, wie insbesondere Gesprächskosten, lediglich nach der Beendigung der Inanspruchnahme der Dienstleistung, wie insbesondere die Bereitstellung einer Kommunikationsverbindung, vorgenommen wird, läßt sich ggü. einer periodischen Abbuchung vom Konto während der Inanspruchnahme einer Dienstleistung, d. h. insbesondere während einer Kommunikationsverbindung, eine deutliche Reduzierung des apparativen Aufwands eines entsprechenden Telekommunikationsnetzes, wie insbesondere eines Mobilfunknetzes, erreichen. Die Belastung des Kommunikationsnetzes ggü. periodischen Abbuchungen ist zudem deutlich geringer.

Ergibt die Überprüfung des Kontostands und der Vergleich des Kontostands mit dem durch die geeignete Wahl vorbestimmten Kontostand jedoch, daß dieser unterschritten ist, so wird das Konto erfindungsgemäß während der Inanspruchnahme der Dienstleistung, wie insbesondere während der Bereitstellung einer Kommunikationsverbindung, periodisch belastet - wie bereits ausgeführt. Durch die erfindungsgemäße Kombination aus periodischer und einmaliger Belastung des Prepaid-Kontos bzw. Guthabenkontos wird erreicht, daß der apparative Aufwand des Kommunikationsnetz des ggü. herkömmlichen Lösungen deutlich reduziert wird. Zudem wird in der Regel keine Dienstleistung erbracht, ohne daß eine ausreichende Deckung des zugeordneten Kontos gegeben ist.

Bei einer bevorzugten Ausführungsform der Erfindung wird der vorbestimmte Kontostand derart festgelegt, daß ein hoher Prozentsatz der Teilnehmer für die Inanspruchnahme der Dienstleistungen des Telekommunikationsnetzes einen Kontostand bzw. Guthabenbetrag aufweist, der den vorbestimmten Kontostand bzw. Guthabenbetrag übersteigt.

Bei einer weiteren Ausführungsform der Erfindung ist vorgesehen, daß der vorbestimmte Kontostand bzw. Guthabenbetrag für jeden einzelnen Teilnehmer bzw. für jedes einzelne Prepaid-Konto festgelegt wird und sich dieser vorbestimmte Kontostand insbesondere daran orientiert, wie hoch die durchschnittlichen Kosten je Inanspruchnahme einer Dienstleistung durch den betreffenden Teilnehmer, wie insbesondere die durchschnittlichen Kosten früherer Telefongespräche, sind.

Bei einer anderen bevorzugten Ausführungsform der Erfindung ist vorgesehen, daß der das Konto verwaltende Computer auf das Konto zugreift, den Kontostand ermittelt und überprüft, ob das Konto den vorbestimmten Kontostand überschreitet oder unterschreitet.

Bei einer ersten, bevorzugten Ausführungsform der Erfindung ist vorgesehen, daß die Überprüfung durch den das Konto verwaltende Computer vor der Bereitstellung der Dienstleistung erfolgt.

Bei einer zweiten, bevorzugten Ausführungsform der Erfindung ist vorgesehen, daß die Überprüfung durch den das Konto verwaltende Computer weitgehend unmittelbar nach der Inanspruchnahme der Dienstleistung vorgenommen wird. Bei einer Unterschreitung des Kontostands in Bezug auf den vorbestimmten Kontostand wird erfindungsgemäß bevorzugt ein dies kenntlich machendes erstes Kennzeichen bzw. erstes Flag, vorzugsweise softwaremäßig, gesetzt oder alternativ bei der Überschreitung des Kontostands in Bezug auf den vorbestimmten Kontostand ein dies kenntlich machendes zweites Kennzeichen bzw. zweites Flag, vorzugsweise wiederum softwaremäßig, gesetzt. Das erste Kennzeichen bzw. erste Flag oder das zweite Kennzeichen bzw. zweite Flag wird bevorzugt vor der Inanspruchnahme bzw. Bereitstellung der Dienstleistung und/oder einer weiteren Dienstleistung abgefragt. In Abhängigkeit vom Ergebnis des Vergleichs wird die Belastung des Kontos, wie zuvor beschrieben, bevorzugt entweder periodisch während der Kommunikationsverbindung oder nach Abschluß der Kommunikationsverbindung vorgenommen.

Bei einer besonders bevorzugten Ausführungsform der Erfindung wird das erste Kennzeichen bzw. erste Flag oder das zweite Kennzeichen bzw. zweite Flag in einem Speicher gespeichert, auf den vor der Bereitstellung der Dienstleistung zur Ermittlung des für die Inanspruchnahme der Dienstleistung zu belastenden Kontos zugegriffen wird. Bevorzugt wird das erste und/oder das zweite Flag deshalb im sogenannten Home-Location-Register bzw. HLR des Mobilfunknetzes gespeichert.

Eine bevorzugte Ausführungsform der Erfindung wird nachfolgend anhand einer Zeichnung näher erläutert. Es zeigt:

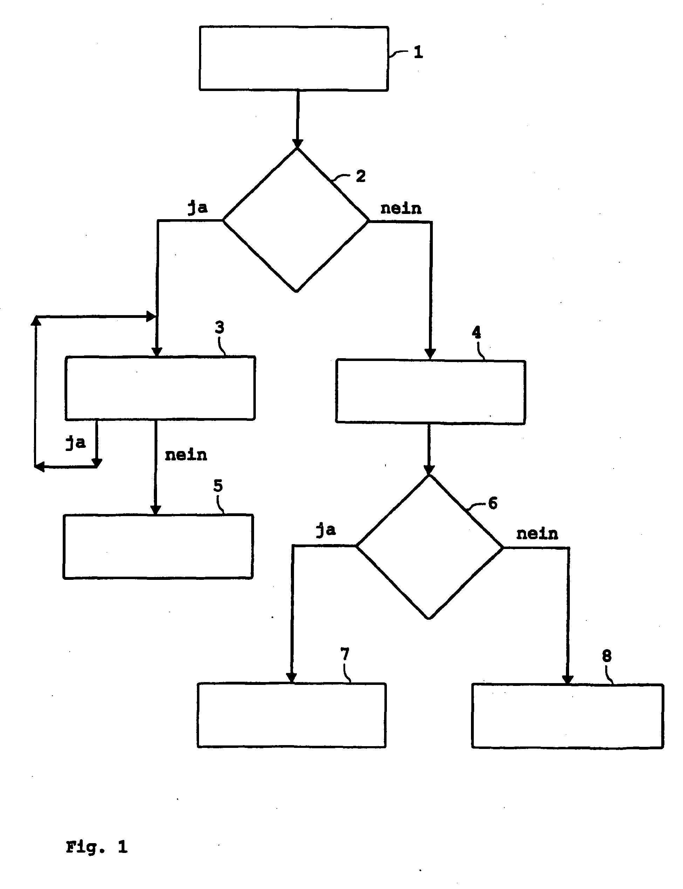

- Fig. 1: das Ablaufschema der bevorzugten Ausführungsform eines erfindungsgemäßen Verfahrens.

Bei dem in der Fig. 1 dargestellten Ablaufschema wird davon ausgegangen, daß der Benutzer eines Mobilfunknetzes über eine Prepaid-Karte und ein Mobilfunkendgerät zum Betrieb in dem Mobilfunknetz verfügt. Der Prepaid-Karte ist von dem Betreiber des Mobilfunknetzes ein Prepaid-Konto bzw. Guthabenkonto zugeordnet worden, daß den aktuellen Kontostand bzw. das aktuelle Gebührenguthaben angibt.

In Block 1 leitet der Benutzer die Herstellung einer Kommunikationsverbindung unter Verwendung einer Prepaid-Karte ein.

Nachfolgend wird in Block 2 überprüft, ob der aktuelle Kontostand einen vorbestimmten Kontostand, Betrag x, wie beispielsweise 20 Euro, überschreitet (Zweig "nein" am Block 2) oder unterschreitet (Zweig "ja" am Block 2). Bei einer bevorzugten Ausführungsform der Erfindung wird dies dadurch kenntlich gemacht, daß dem betreffenden Konto mindestens ein entsprechendes Kennzeichen bzw. Flag zugeordnet ist. Die Speicherung des Kontostands der betreffenden Prepaid-Karte erfolgt bevorzugt im sogenannten HLR (Home-Location-Register) unter Verwendung eines Computers des Mobilfunknetzes, der auf das HLR zugreift bzw. zugreifen kann.

Alternativ kann der auf das HLR zugreifende Computer den Kontostand des betreffenden Prepaid-Kontos mit einem vorgegebenen bzw. vorbestimmten Kontostand (ohne Verwendung eines entsprechenden Kennzeichens oder Software-Flags bzw.

Flags) vergleichen. An der Verwendung eines entsprechenden Kennzeichens oder Flags ist jedoch von Vorteil, daß dieses es schneller und/oder unter weniger starker Auslastung des Computers erlaubt festzustellen, ob der vorbestimmte Kontostand bzw. Betrag x unterschritten oder überschritten ist.

Reicht der Kontostand zur Herstellung einer Kommunikationsverbindung zwar aus, ist der vorbestimmte Kontostand aber unterschritten (Zweig "ja" am Block 2), so wird die Kommunikationsverbindung von dem Mobilfunknetz bereitgestellt und gemäß Block 3 erfolgt eine periodische Belastung des Prepaid-Kontos während der Kommunikationsverbindung (Zweig "ja" am Block 3). Zudem wird bevorzugt in gleichen oder größeren zeitlichen Abständen überprüft, ob der Kontostand des Prepaid-Kontos noch für eine Fortführung der Kommunikationsverbindung ausreicht. Alternativ können diese zeitlichen Abstände (Zeitintervalle) mit abnehmenden aktuellen Kontostand über die Zeit kleiner werden, d.h. die Abfrage erfolgt häufiger.

Reicht der aktuelle Kontostand des Prepaid-Kontos nicht mehr aus (Zweig "nein" am Block 3), so wird gemäß Block 5 eine Unterbrechung der Kommunikationsverbindung, vorzugsweise nach einem rechtzeitigen Warnton oder dergleichen, durch das Mobilfunknetz herbeigeführt.

Ergibt der Vergleich (Zweig "nein" am Block 2) gemäß Block 2, daß der Kontostand des Prepaid-Kontos den vorbestimmten Kontostand überschreitet, so wird die von dem Benutzer gewünschte Kommunikationsverbindung herbeigeführt und das Prepaid-Konto erst nach der Beendigung der Kommunikationsverbindung belastet.

Weitgehend gleichzeitig und/oder nach der Belastung des Prepaid-Kontos erfolgt eine Überprüfung, ob der Kontostand des Prepaid-Kontos nach wie vor größer oder kleiner als der vorbestimmte Kontostand bzw. Gebührenbetrag ist, wie durch Block 6 angezeigt. Diese Überprüfung erfolgt bevorzugt wiederum durch den Computer des Mobilfunknetzes, der auf das HLR zugreifen kann. Alternativ kann diese Überprüfung des aktuellen Kontostandes in zeitlichen Abständen '(Zeitintervallen) stattfinden, die mit abnehmenden aktuellen Kontostand kleiner werden. Beispielsweise kann die zeitliche Überprüfung, d.h. die zeitliche Veränderung der Kontoüberprüfung, umgekehrt proportional zum Verlauf des aktuellen Kontostandes stattfinden. Nimmt der Kontostand mit der Steigung -a über die Zeit ab, kann die Häufigkeit der Überprüfung über die Zeit mit der Steigung a ansteigen. Alternativ kann der Verlauf der Überprüfung auch asymptotisch oder quadratisch verlaufen.

Ist der Kontostand des Prepaid-Kontos größer als der vorbestimmte Gebührenbetrag bzw. Betrag x (Zweig "ja" am Block 6), so wird dem betreffenden Prepaid-Konto gemäß Block 7 mindestens ein entsprechendes Kennzeichen oder Flag zugeordnet. Ist der vorbestimmte Kontostand unterschritten (Zweig "nein" am Block 6), so wird dem Prepaid-Konto ein entsprechendes Kennzeichen oder Flag gemäß Block 8 zugeordnet.

Bevorzugt wird lediglich ein einziges Kennzeichen oder Flag durch einen Computer des Mobilfunknetzes gesetzt, das kenntlich macht, daß der vorbestimmte Kontostand unterschritten worden ist.

Wünscht der Benutzer die Herstellung einer weiteren Kommunikationsverbindung, so läuft das in Fig. 1 dargestellte Verfahren, beginnend mit Block 1, erneut ab.

## Patentansprüche

1. Verfahren zur Belastung eines in einem HLR gespeicherten Prepaid-Kontos für eine zu einem Mobilfunkendgerät über ein Mobilfunknetz hergestellte Kommunikationsverbindung durch einen Computer mit folgenden Schritten:
- Überprüfung durch den Computer vor der Herstellung der Kommunikationsverbindung, ob das Prepaid-Konto einen vorbestimmten Kontostand überschreitet oder unterschreitet, durch Zugriff des Computers auf das HLR, wobei der vorbestimmte Kontostand größer ist als Null.
- wenn das Prepaid-Konto den vorbestimmten Kontostand unterschreitet, periodische Belastung des Prepaid-Kontos während der Kommunikationsverbindung,
- wenn das Prepaid-Konto den vorbestimmten Kontostand überschreitet, Belastung des Prepaid-Kontos für die Kommunikationsverbindung erst mit der Beendigung der Kommunikationsverbindung.

2. Verfahren nach Anspruch 1, wobei bei Unterschreitung des Prepaid-Kontos in Bezug auf den vorbestimmten Kontostand ein dies kenntlich machendes erstes Kennzeichen bzw. erstes Flag gesetzt wird oder bei der Überschreitung des Kontostands des Prepaid-Kontos in Bezug auf den vorbestimmten Kontostand ein dies kenntlich machendes zweites Kennzeichen bzw. zweites Flag gesetzt wird.

3. Verfahren nach Anspruch 2, wobei das erste Kennzeichen bzw. erste Flag oder das zweite Kennzeichen bzw. zweite Flag vor der Herstellung der Kommunikationsverbindung abgefragt wird und eine Belastung des Prepaid-Kontos dementsprechend periodisch während der Kommunikationsverbindung oder erst mit Beendigung der Kommunikationsverbindung vorgenommen wird.

4. Verfahren nach Anspruch 2 oder 3, wobei das erste Kennzeichen bzw. erste Flag oder das zweite Kennzeichen bzw. zweite Flag in dem HLR gespeichert werden.

## Claims

1. Procedure for debiting a prepaid account stored in an HLR (Home Location Register) for a computer communication connection to a mobile communications terminal established via a cellular network, with the following steps:
- Before establishing the communication connection, the computer checks whether the prepaid account exceeds or falls short of a predetermined account balance, in that the computer accesses the HLR in which the predetermined account balance is greater than zero.
- If the prepaid account falls short of the predetermined account balance, periodic debiting of the prepaid account during the communication connection,
- If the prepaid account exceeds the predetermined account balance, the prepaid account is only debited for the communication connection after termination of the communication connection.

2. Procedure according to Claim 1, wherein if the prepaid account is fallen short of with respect to the predetermined account balance, an initial sign or initial flag will be raised signifying this or if the account balance of the prepaid account is exceeded with respect to the predetermined account balance, a second sign or second flag will be raised to signify this.

3. Procedure according to Claim 2, wherein the initial sign or initial flag or the second sign or second flag is queried before the communication connection is established and the prepaid account is periodically debited accordingly during the communication connection or only after termination of the communication connection.

4. Procedure according to Claims 2 or 3, wherein the initial sign or initial flag or the second sign or second flag is stored in the HLR.

## Revendications

1. Procédé pour débiter un compte prépayé stocké dans un enregistreur de localisation nominal (HLR ou Home Location Register) pour une connexion de communication établie vers un terminal de téléphonie mobile sur un réseau de téléphonie mobile par un ordinateur selon les étapes suivantes :
- vérification par l'ordinateur avant l'établissement de la connexion de communication que le compte prépayé est supérieur ou inférieur à un solde de compte prédéterminé en accédant à l'ordinateur sur le HLR, le solde de compte prédéterminé étant supérieur à zéro ;
- si le compte prépayé est inférieur au solde de compte prédéterminé, le compte prépayé est débité périodiquement au cours de la connexion de communication ;
- si le compte prépayé est supérieur au solde de compte prédéterminé, le compte prépayé est débité pour la connexion de communication seulement à l'achèvement de la connexion de communication.

2. Procédé selon la revendication 1, par lequel, lorsque le compte prépayé devient inférieur au solde de compte prédéterminé, un premier indicateur ou premier drapeau le signalant est placé ou, lorsque le solde de compte du compte prépayé devient supérieur au solde de compte prédéterminé, un deuxième indicateur ou deuxième drapeau le signalant est placé.

3. Procédé selon la revendication 2, par lequel le premier indicateur ou premier drapeau ou le deuxième indicateur ou deuxième drapeau est interrogé avant l'établissement de la connexion de communication et un débit du compte prépayé est effectué en conséquence périodiquement au cours de la connexion de communication ou seulement à l'achèvement de la connexion de communication.

4. Procédé selon les revendications 2 ou 3, par lequel le premier indicateur ou premier drapeau ou le deuxième indicateur ou deuxième drapeau sont enregistrés dans le HLR.
